# EUROPEAN PATENT APPLICATION

(11) **EP 4 501 631 A1**
(43) Date of publication of application: **05.02.2025**
(21) Application number: 23780335.8
(22) Date of filing: 27.03.2023
(51) Int. Cl.: B32B 27/10, B32B 43/00, B65D 65/46, D21H 19/10, D21H 19/28, D21H 27/30

(54) **LAMINATE**

(30) Priority: 29.03.2022 JP 2022054011
(71) Applicant: Kao Corporation, Tokyo 103-8210 (JP)
(72) Inventor: YORIFUJI,Miyabi, Wakayama-shi, Wakayama 640-8580 (JP); YOSHIMURA,Tadanori, Wakayama-shi, Wakayama 640-8580 (JP); NORO,Takahiro, Wakayama-shi, Wakayama 640-8580 (JP); SASAKI,Keiji, Wakayama-shi, Wakayama 640-8580 (JP)
(74) Representative: Hoffmann Eitle
(86) International application number: PCT/JP2023/012174
(87) International publication number: WO 2023/190325

(57) **Abstract**

The present invention is a laminate comprising: a paper substrate layer; a temperature-responsive water-soluble resin layer; and a water-insoluble layer in this order. According to the present invention, a laminate that can realize packing stuff having excellent water resistance while a raw material, i.e., pulp, of a paper substrate layer and a raw material of a water-insoluble layer can be recovered at high quality and a high recovery rate can be provided.

## Description

### TECHNICAL FIELD

The present invention relates to a laminate.

### BACKGROUND ART

As a material for packing stuff for food and the like, a laminate is used that is obtained by layering a water-insoluble layer, such as a thermoplastic resin layer, on a substrate layer such as a paper substrate. The packing stuff is sometimes, after usage, subjected to a recycling treatment in which the substrate is separated from the water-insoluble layer.

### SUMMARY OF THE INVENTION

The present invention is a laminate including: a paper substrate layer; a temperature-responsive water-soluble resin layer; and a water-insoluble layer in this order.

### DETAILED DESCRIPTION OF THE INVENTION

Since it is generally not easy to separate a laminate into a substrate and a water-insoluble layer, there have been cases in which a raw material of the substrate obtained after a recycling treatment contains a lot of thermoplastic resin that is a raw material of the water-insoluble layer, and conversely in which a raw material, **i.e.,** a thermoplastic resin, of the water-insoluble layer obtained after a recycling treatment contains a lot of raw material of the substrate. Therefore, the recovery rate of the raw material of the substrate and the raw material of the water-insoluble layer has not been high, and the quality of the materials recovered has not been satisfactory.

A means considered in order to solve the above-described problem is to use, as a packing container, a laminate including a water-soluble adhesive layer, which contains a water-soluble resin, between the substrate and the water-insoluble layer, and bring the packing container into contact with water after usage to dissolve the adhesive layer and thus separate the substrate from the water-insoluble layer (for example, JP-A-2000-501755).

Conventional water-soluble resins, however, have poor water resistance. Therefore, when packing stuff that includes a laminate including a water-soluble adhesive layer containing a conventional water-soluble resin is used in an environment of relatively high humidity, the packing stuff may possibly be damaged due to swelling or the like of the water-soluble resin layer.

The present invention provides a laminate that can realize packing stuff having excellent water resistance while a raw material, **i.e.,** pulp, of a paper substrate layer and a raw material of a water-insoluble layer can be recovered at high quality and a high recovery rate.

The present invention is a laminate including: a paper substrate layer; a temperature-responsive water-soluble resin layer; and a water-insoluble layer in this order.

### EFFECTS OF THE INVENTION

According to the present invention, a laminate that can realize packing stuff having excellent water resistance while a raw material, i.e., pulp, of a paper substrate layer and a raw material of a water-insoluble layer can be recovered at high quality and a high recovery rate can be provided.

One embodiment according to the present invention is explained below.

### <Laminate>

The laminate of the present embodiment includes a paper substrate layer, a temperature-responsive water-soluble resin layer, and a water-insoluble layer in this order. The laminate of the present embodiment is preferably a laminate in which the sheet including the paper substrate layer and the sheet including the water-insoluble layer are laminated together by the temperature-responsive water-soluble resin layer. According to the laminate of the present embodiment, it is possible to realize a packing stuff that has excellent water resistance while a raw material, i.e., pulp, of a paper substrate layer and a raw material of a water-insoluble layer can be recovered at high quality and a high recovery rate.

### [Paper substrate layer]

The paper substrate layer is not particularly limited as long as the paper substrate layer includes one used as a paper substrate of packing stuff.

### [Temperature-responsive water-soluble resin layer]

In the present description, the temperature-responsive water-solubility means properties of being poorly soluble in water at room temperature that is a temperature during usage of the packing stuff, but easily soluble in water heated higher than room temperature, preferably properties of being poorly soluble in 25°C water, but easily soluble in 70°C water. That is, the temperature-responsive water-soluble resin layer has properties of being poorly soluble in room-temperature water, but easily soluble in water heated higher than room temperature, preferably poorly soluble in 25°C water, but easily soluble in 70°C water. The poor water-solubility means properties of being unable to be dissolved at 10 g or more in 100 g of water, and the easy water-solubility means properties of being able to be dissolved at 90 g or more in 100 g of water. The temperature-responsive water-soluble resin layer is not particularly limited as long as the temperature-responsive water-soluble resin layer is a layer having temperature-responsive water-solubility, and one example of the temperature-responsive water-soluble resin layer is a layer containing a temperature-responsive water-soluble resin.

### [Temperature-responsive water-soluble resin]

The temperature-responsive water-soluble resin is not particularly limited as long as the temperature-responsive water-soluble resin is a resin having temperature-responsive water-solubility and dispersibility into neutral water. An example of the temperature-responsive water-soluble resin is a temperature-responsive water-soluble resin that has a hydrophilic group other than a hydrophilic group constituting polymerization for generation of the temperature-responsive water-soluble resin (hereinafter, also simply referred to as a hydrophilic group), preferably a temperature-responsive water-soluble resin that contains a monomer unit A having the hydrophilic group, and a monomer unit B not having the hydrophilic group.

Examples of the neutral water include water and an aqueous solution having a pH of 6 to 8, preferably 6.5 to 7.5 at 25°C. Specific examples of the neutral water include deionized water, pure water, tap water, and industrial water, and deionized water or tap water is preferable from the viewpoint of availability. The neutral water can contain other components such as a water-soluble organic solvent and a surfactant. Examples of the water-soluble organic solvent include lower alcohols such as methanol, ethanol, and 2-propanol, glycol ethers such as propylene glycol monomethyl ether, ethylene glycol monoethyl ether, ethylene glycol mono-tertiary butyl ether, and diethylene glycol monobutyl ether, and ketones such as acetone and methyl ethyl ketone. Examples of the surfactant include anionic surfactants such as an alkyl sulphate ester salt, an alkyl ether sulphate ester salt, an olefin sulfonate, and an alkyl ether carboxylate; cationic surfactants such as alkyltrimethylammonium salt; and nonionic surfactants such as polyoxyethylene alkyl ether and alkyl glycoside.

Examples of the temperature-responsive water-soluble resin include a water-soluble polyester resin, a water-soluble polyamide resin, a water-soluble polyimide resin, a water-soluble acrylic resin, a water-soluble polyurethane resin, a water-soluble polyallylamine resin, a water-soluble phenol resin, a water-soluble epoxy resin, a water-soluble phenoxy resin, a water-soluble urea resin, a water-soluble melamine resin, a polyvinyl alcohol resin, and modified products of these resins. These can be used singly or in combination of two or more types thereof. Among them, from the viewpoint of exhibiting the effects of the present invention, at least one selected from the group consisting of a water-soluble polyester resin, a water-soluble polyamide resin, and a water-soluble acrylic resin are preferable, and a water-soluble polyester resin is more preferable.

### [Monomer unit A]

The monomer unit A has a hydrophilic group. The monomer from which the monomer unit A is derived is referred to as a monomer A.

Examples of the hydrophilic group include at least one selected from the group consisting of a primary amino group, a secondary amino group, a tertiary amino group, a quaternary ammonium base, an oxyalkylene group, a hydroxyl group, a carboxyl group, a carboxylate group, a phosphoric acid group, a phosphate group, a sulfonic acid group, and a sulfonate group from the viewpoint of imparting dispersibility into neutral water. Among them, at least one selected from the group consisting of a quaternary ammonium base, an oxyalkylene group, a carboxylate group, a phosphate group, and a sulfonate group are preferable, at least one selected from the group consisting of a quaternary ammonium base, an oxyalkylene group, and a sulfonate group are more preferable, and a sulfonate group is still more preferable from the same viewpoint.

The sulfonate group is preferably a sulfonate group represented by -SO₃M³ (M³ represents a counter ion of a sulfonic acid group that constitutes a sulfonate group, and from the viewpoint of dispersing the temperature-responsive water-soluble resin layer in neutral water to separate the paper substrate layer and the water-insoluble layer, M³ is preferably at least one selected from the group consisting of a metal ion and an ammonium ion, more preferably at least one selected from the group consisting of a metal ion, still more preferably at least one selected from the group consisting of an alkali metal ion and an alkaline earth metal ion, still more preferably at least one selected from the group consisting of an alkali metal ion, still more preferably at least one selected from the group consisting of a sodium ion and a potassium ion, and still more preferably a sodium ion.) from the viewpoint of dispersing the temperature-responsive water-soluble resin layer in neutral water to separate the paper substrate layer and the water-insoluble layer, and the viewpoint of ease of polymerization reaction during production of the temperature-responsive water-soluble resin.

The content of the hydrophilic group in the temperature-responsive water-soluble resin is preferably 0.5 mmol/g or more, more preferably 0.6 mmol/g or more, still more preferably 0.7 mmol/g or more and still more preferably 0.8 mmol/g or more from the viewpoint of dispersing the temperature-responsive water-soluble resin layer in neutral water to separate the paper substrate layer and the water-insoluble layer, and is preferably 1.8 mmol/g or less, more preferably 1.4 mmol/g or less, still more preferably 1.0 mmol/g or less, and still more preferably 0.9 mmol/g or less from the viewpoint of improving the moisture resistance of the composite material. In the present specification, the content of the hydrophilic group can be measured by the method described in EXAMPLES.

Though the monomer unit A is not particularly limited as long as the monomer unit A is a monomer unit having the hydrophilic group, a dicarboxylic acid monomer unit having the hydrophilic group is preferable from the viewpoint of dispersing the temperature-responsive water-soluble resin layer in neutral water to separate the paper substrate layer and the water-insoluble layer, and the viewpoint of improving the moisture resistance.

The monomer A is preferably one or more selected from the group consisting of carboxylic acids having the hydrophilic group, amines, amino acids, and their salts, and more preferably a carboxylic acid having the hydrophilic group or its salt from the viewpoint of dispersing the temperature-responsive water-soluble resin layer in neutral water to separate the paper substrate layer and the water-insoluble layer, the viewpoint of improving the moisture resistance, and the viewpoint of ease of polymerization reaction during production of the temperature-responsive water-soluble resin. Among the carboxylic acids and their salts, aromatic carboxylic acids having the hydrophilic group and their salts are preferable, and one or more selected from the group consisting of sulfonate group-containing aromatic dicarboxylic acids and their salts are more preferable from the same viewpoints. Among them, one or more selected from the group consisting of sulfophthalic acids, sulfonaphthalenedicarboxylic acid, and their salts are preferable, one or more selected from the group consisting of sulfophthalic acids and their salts are more preferable, one or more selected from the group consisting of sulfoisophthalic acids, sulfoterephthalic acids, and their salts are still more preferable, and 5-sulfoisophthalic acid and its salts are still even more preferable from the same viewpoints.

The percentage of the monomer unit A based on a total of all monomer units of the temperature-responsive water-soluble resin is preferably 8 mol% or more, more preferably 9 mol% or more, and still more preferably 10 mol% or more from the viewpoint of dispersing the temperature-responsive water-soluble resin layer in neutral water to separate the paper substrate layer and the water-insoluble layer, and is preferably 24 mol% or less, more preferably 20 mol% or less, and still more preferably 16 mol% or less from the viewpoint of improving the moisture resistance. In this specification, the percentage of each monomer unit in the resin is measured by the method described in EXAMPLES.

When the temperature-responsive water-soluble resin is a water-soluble polyester resin, the percentage of the dicarboxylic acid monomer unit having the hydrophilic group based on a total of all dicarboxylic acid monomer units of the temperature-responsive water-soluble resin is preferably 16 mol% or more, more preferably 18 mol% or more, and still more preferably 20 mol% or more from the viewpoint of dispersing the temperature-responsive water-soluble resin layer in neutral water to separate the paper substrate layer and the water-insoluble layer, and is preferably 48 mol% or less, more preferably 40 mol% or less, and still more preferably 32 mol% or less from the viewpoint of improving the moisture resistance of the temperature-responsive water-soluble resin layer.

### [Monomer unit B]

The monomer unit B has no hydrophilic group. The monomer from which the monomer unit B is derived is referred to as a monomer B. The monomer unit B is preferably a dicarboxylic acid monomer unit having no hydrophilic group (hereinafter, also referred to as a dicarboxylic acid monomer unit B) from the viewpoint of improving the moisture resistance.

The dicarboxylic acid from which the dicarboxylic acid monomer unit B is derived is more preferably one or more selected from the group consisting of an aromatic dicarboxylic acid having no hydrophilic group and an aliphatic dicarboxylic acid having no hydrophilic group, and still more preferably one or more selected from the group consisting of an aromatic dicarboxylic acid having no hydrophilic group from the viewpoint of improving the moisture resistance, and the viewpoint of ease of polymerization reaction during production of the temperature-responsive water-soluble resin.

Examples of the aromatic dicarboxylic acid having no hydrophilic group include one or more selected from the group consisting of benzenedicarboxylic acid, furandicarboxylic acid, and naphthalenedicarboxylic acid. Among them, one or more selected from the group consisting of terephthalic acid, isophthalic acid, and 2,6-naphthalenedicarboxylic acid are preferable from the viewpoint of improving the moisture resistance.

Examples of the aliphatic dicarboxylic acid having no hydrophilic group include one or more selected from the group consisting of malonic acid, succinic acid, glutaric acid, adipic acid, 1,4-cyclohexanedicarboxylic acid, and 1,3-adamantanedicarboxylic acid. Among them, adipic acid is preferable from the viewpoint of improving the moisture resistance.

The percentage of the amount of substance of the monomer unit B based on a total of the amount of substance of all monomer units in the temperature-responsive water-soluble resin is preferably 26 mol% or more, more preferably 28 mol% or more, and still more preferably 30 mol% or more from the viewpoint of improving the moisture resistance, and is preferably 42 mol% or less, more preferably 41 mol% or less, and still more preferably 40 mol% or less from the viewpoint of dispersing the temperature-responsive water-soluble resin layer in neutral water to separate the paper substrate layer and the water-insoluble layer.

When the temperature-responsive water-soluble resin is a water-soluble polyester resin, the percentage of the dicarboxylic acid monomer unit B based on a total of all dicarboxylic acid monomer units of the temperature-responsive water-soluble resin is preferably 52 mol% or more, more preferably 56 mol% or more, and still more preferably 60 mol% or more from the viewpoint of improving the moisture resistance, and is preferably 84 mol% or less, more preferably 82 mol% or less, and still more preferably 80 mol% or less from the viewpoint of improving the moisture resistance of the temperature-responsive water-soluble resin layer.

The molar ratio of the monomer unit A to the monomer unit B in the temperature-responsive water-soluble resin (the monomer unit A/the monomer unit B) is preferably 16/84 or more, more preferably 18/82 or more, and still more preferably 20/80 or more from the viewpoint of dispersing the temperature-responsive water-soluble resin layer in neutral water to separate the paper substrate layer and the water-insoluble layer, and preferably 48/52 or less, more preferably 40/60 or less, still more preferably 32/68 or less from the viewpoint of improving the moisture resistance.

### (Diol monomer unit C)

When the temperature-responsive water-soluble resin is a water-soluble polyester resin, the water-soluble polyester resin includes a diol monomer unit C other than the monomer unit A and the monomer unit B. The diol from which the diol monomer unit C is derived is also referred to as a diol C.

As the diol C, an aliphatic diol, an aromatic diol and the like can be used, and an aliphatic diol is preferable from the viewpoint of availability of raw materials of the water-soluble polyester resin.

The carbon number of the diol C is preferably 2 or more from the viewpoint of dispersing the temperature-responsive water-soluble resin layer in neutral water to separate the paper substrate layer and the water-insoluble layer, and is preferably 31 or less, more preferably 25 or less, still more preferably 20 or less, and still more preferably 15 or less from the viewpoint of improving the moisture resistance.

Examples of the aliphatic diol include one or more selected from the group consisting of a chain diol and a cyclic diol, and a chain diol is preferable from the viewpoint of availability of raw materials and a cyclic diol is preferable from the viewpoint of improving water resistance.

The percentage of a total of a monomer unit derived from the cyclic diol based on a total of the diol monomer unit C is preferably 40 mol% or more, more preferably 50 mol% or more, and still more preferably 60 mol% or more from the viewpoint of dispersing the temperature-responsive water-soluble resin layer in neutral water to separate the paper substrate layer and the water-insoluble layer, and is preferably 90 mol% or less, more preferably 85 mol% or less, and still more preferably 80 mol% or less from the viewpoint of availability of raw materials.

The carbon number of the chain diol is preferably 2 or more from the viewpoint of improving the moisture resistance, and is preferably 20 or less, still more preferably 15 or less, and still more preferably 6 or less from the viewpoint of dispersing the temperature-responsive water-soluble resin layer in neutral water to separate the paper substrate layer and the water-insoluble layer.

The chain diol is preferably one or more selected from the group consisting of ethylene glycol, propanediol, butanediol, neopentyl glycol, pentanediol, hexanediol, diethylene glycol, triethylene glycol, polyethylene glycol, dipropylene glycol, and polypyrene glycol, more preferably one or more selected from the group consisting of ethylene glycol, 1,3-propanediol, and 1,6- hexanediol from the viewpoint of improving the moisture resistance and the viewpoint of dispersing the temperature-responsive water-soluble resin layer in neutral water to separate the paper substrate layer and the water-insoluble layer.

The carbon number of the cyclic diol is preferably 3 or more, more preferably 4 or more, and still more preferably 6 or more from the viewpoint of improving the moisture resistance, and is preferably 31 or less, still more preferably 20 or less, and still more preferably 15 or less from the viewpoint of dispersing the temperature-responsive water-soluble resin layer in neutral water to separate the paper substrate layer and the water-insoluble layer.

The cyclic diol is preferably one or more selected from the group consisting of cyclohexanedimethanol, hydrogenated bisphenol A, isosorbide, bisphenoxyethanolfluorene, bisphenol fluorene, biscresoxyethanolfluorene, and biscresol fluorene, and more preferably 1,4-cyclohexanedimethanol from the viewpoint of improving the moisture resistance and the viewpoint of dispersing the temperature-responsive water-soluble resin layer in neutral water to separate the paper substrate layer and the water-insoluble layer.

The water-soluble polyester resin can have monomer units other than the dicarboxylic acid monomer unit A, the dicarboxylic acid monomer unit B, and the diol monomer unit C as long as the effects of the present embodiment are not impaired.

The method for producing the water-soluble polyester resin is not particularly limited, and a conventionally known method for producing a polyester resin can be applied.

The weight average molecular weight of the water-soluble polyester resin is preferably 1,000 or more, more preferably 3,000 or more, and still more preferably 4,000 or more from the viewpoint of improving the moisture resistance, and is preferably 80,000 or less, more preferably 50,000 or less, and still more preferably 30,000 or less from the viewpoint of dispersing the temperature-responsive water-soluble resin layer in neutral water to separate the paper substrate layer and the water-insoluble layer. In the present specification, the weight average molecular weight is measured by the method described in EXAMPLES.

The water-soluble polyester resin has a glass transition temperature of preferably 0° C or more, more preferably 5° C or more, and still more preferably 10° C or more from the viewpoint of improving the moisture resistance, and preferably 200° C or less, more preferably 160° C or less, and still more preferably 120° C or less from the viewpoint of dispersing the temperature-responsive water-soluble resin layer in neutral water to separate the paper substrate layer and the water-insoluble layer. In the present description, the glass transition temperature is measured by the method described in EXAMPLES.

The water-soluble polyester resin has a crystalline melting point of preferably 30° C or more, more preferably 40° C or more, and still more preferably 50° C or more from the viewpoint of improving the moisture resistance, and preferably 150° C or less, more preferably 130° C or less, and still more preferably 110° C or less from the viewpoint of dispersing the temperature-responsive water-soluble resin layer in neutral water to separate the paper substrate layer and the water-insoluble layer. In the present description, the crystalline melting point is measured by the method described in EXAMPLES.

The content of the temperature-responsive water-soluble resin in the temperature-responsive water-soluble resin layer is preferably 30% by mass or more, more preferably 50% by mass or more, more preferably 70% by mass or more, still more preferably substantially 100% by mass, and still more preferably 100% by mass from the viewpoint of dispersing the temperature-responsive water-soluble resin layer in neutral water to separate the paper substrate layer and the water-insoluble layer. In the present description, substantially 100% by mass means a state in which a trace amount of impurities and the like is unavoidably contained.

The film thickness of the temperature-responsive water-soluble resin layer is changed as appropriate according to the use of the packing stuff, and is not particularly limited, but is generally 0.01 or more and 100 µm or less.

### [Water-insoluble layer]

Examples of the water-insoluble layer include a resin layer, a metal layer, and a glass layer, and the water-insoluble layer functions as a filler layer, a barrier layer, a laminate layer, a heat seal layer, a peeling agent layer, an adhesive layer, an acceptor layer, a flame retardant layer, or the like. Used as a resin constituting the resin layer is a thermoplastic resin such as a polyolefin, an acrylic resin, and a polyvinyl chloride resin, or a thermosetting resin such as a urethane resin and a silicone resin. Among these resins, it is possible to use a polyethylene resin (PE), preferably a low-density polyethylene resin (LDPE), more preferably a linear low-density polyethylene resin (LLDPE), or the like.

### <Method for manufacturing laminate>

The method for manufacturing the laminate of the present embodiment includes a step A of disposing a temperature-responsive water-soluble resin layer on a paper substrate layer; and a step B of forming, after the step A, a water-insoluble layer on a surface of the temperature-responsive water-soluble resin layer opposite from the paper substrate layer.

### [Step A]

The method for disposing the temperature-responsive water-soluble resin layer on the paper substrate layer in the step A is not particularly limited, and examples thereof include a method for preparing an application liquid containing the temperature-responsive water-soluble resin, applying the application liquid by a conventional application method such as a gravure method, a letterpress (flexo) method, an offset method, a roll coater method (transfer method), a spray method, a brush coating method, a bar coater method, an inkjet method, a screen method, a die coating method, a spin coating method, a dip method, a meyer bar method, and an air knife method, and then drying the application liquid.

The concentration of the temperature-responsive water-soluble resin in the application liquid is preferably 1 mass% or more, more preferably 5 mass% or more, still more preferably 10 mass% or more, and preferably 60 mass% or less, more preferably 40 mass% or less, still more preferably 20 mass% or less, from the viewpoint of improving the efficiency of application and the uniformity of the temperature-responsive water-soluble resin layer.

The solvent used for preparing the application liquid is not particularly limited as long as the solvent is one that can be used as a solvent.

The method for drying the application liquid applied onto the paper substrate layer is not particularly limited, and a conventional drying method can be applied.

### [Step B]

The method for forming the water-insoluble layer on a surface of the temperature-responsive water-soluble resin layer opposite from the paper substrate layer in the step B is not particularly limited, and a known method can be used according to the contents of the water-insoluble layer. When the surface of the temperature-responsive water-soluble resin layer opposite from the paper substrate layer is bonded to the water-insoluble layer with an adhesive, the laminate includes an adhesive layer. The contents of the adhesive, the thickness of the adhesive layer, and the like can be changed as appropriate according to, for example, the contents of the temperature-responsive water-soluble resin layer or the water-insoluble layer, or the use of the packing stuff including the laminate.

### <Method for treating the laminate>

The method for treating the laminate of the present embodiment includes a step C of separating the paper substrate layer from the temperature-responsive water-soluble resin layer by treating the laminate with 50°C or higher neutral water.

The temperature of the neutral water used for treating the laminate in the step C is preferably 60°C or higher, more preferably 70°C or higher, from the viewpoint of efficiently separating the paper substrate layer from the temperature-responsive water-soluble resin layer, and is preferably 100°C or lower, more preferably 90°C or lower, still more preferably 80°C or lower, from the viewpoint of the upper limit of water temperature and easiness of temperature control.

The method for treating the laminate with the 50°C or higher neutral water is not particularly limited, and examples thereof include a method for immersing the laminate in the neutral water. The treatment with the neutral water may be performed after performing a treatment, such as cutting, on the laminate.

### <Method for recovering pulp>

The method for recovering pulp of the present embodiment includes a step D1 of recovering pulp derived from the paper substrate layer, after the step C of the method for treating the laminate.

As the method for recovering the pulp in the step D1, a known method can be applied. For example, after the step C, the pulp can be macerated, and then recovered by a known method. The recovered pulp can be used as a raw material for recycled paper. That is, the method for manufacturing recycled paper includes the method for recovering pulp.

### <Method for recovering a water-insoluble layer>

The method for recovering the water-insoluble layer of the present embodiment includes a step D2 of recovering a raw material of the water-insoluble layer after the step C of the method for treating the laminate.

As the method for recovering the water-insoluble layer in the step D2, a known method can be applied according to the raw material of the water-insoluble layer.

### <Method for recovering a temperature-responsive water-soluble resin>

The method for recovering the temperature-responsive water-soluble resin of the present embodiment includes a step D3 of recovering the temperature-responsive water-soluble resin after the step C of the method for treating the laminate.

As the method for recovering the temperature-responsive water-soluble resin in the step D3, a known method can be applied according to the temperature-responsive water-soluble resin.

### <Packing stuff>

Packing stuff according to the present embodiment includes the laminate. The packing stuff according to the present embodiment can be used in a high-humidity environment, and enables, after usage, separation of the paper substrate layer from the water-insoluble layer by the method for treating the laminate. Specific examples of the packing stuff include a packing container, an indication seal, and peeling paper.

The present specification further discloses the following embodiments.
<1> A laminate comprising: a paper substrate layer; a temperature-responsive water-soluble resin layer; and a water-insoluble layer in this order.
<2> The laminate according to <1>, wherein the temperature-responsive water-soluble resin layer is poorly soluble in 25°C water but easily soluble in 70°C water.
<3> The laminate according to <1> or <2>, wherein the water-insoluble layer is a resin layer.
<4> The laminate according to <3>, wherein a resin constituting the resin layer is preferably a polyolefin, more preferably a polyethylene resin (PE), still more preferably a low-density polyethylene resin (LDPE), still more preferably a linear low-density polyethylene resin (LLDPE) .
<5> The laminate according to any one of <1> to <4>, wherein the temperature-responsive water-soluble resin layer contains a temperature-responsive water-soluble resin.
<6> The laminate according to <5>, wherein the temperature-responsive water-soluble resin has a hydrophilic group.
<7> The laminate according to <5> or <6>, wherein the temperature-responsive water-soluble resin contains a monomer unit A having a hydrophilic group, and a monomer unit B not having the hydrophilic group.
<8> The laminate according to <6> or <7>, wherein a content of the hydrophilic group in the temperature-responsive water-soluble resin is preferably 0.5 mmol/g or more, more preferably 0.6 mmol/g or more, still more preferably 0.7 mmol/g or more and still more preferably 0.8 mmol/g or more.
<9> The laminate according to any one of <6> to <8>, wherein the content of the hydrophilic group in the temperature-responsive water-soluble resin is preferably 1.8 mmol/g or less, more preferably 1.4 mmol/g or less, still more preferably 1.0 mmol/g or less, and still more preferably 0.9 mmol/g or less.
<10> The laminate according to any one of <6> to <9>, wherein the hydrophilic group is a sulfonate group.
<11> The laminate according to any one of <5> to <10>, wherein the temperature-responsive water-soluble resin is a water-soluble polyester resin having the hydrophilic group.
<12> The laminate according to <11>, wherein a proportion of a dicarboxylic acid unit having the hydrophilic group in all dicarboxylic acid units constituting the water-soluble polyester resin is preferably 16 mol% or more, more preferably 18 mol% or more, and still more preferably 20 mol% or more.
<13> The laminate according to <11> or <12>, wherein the proportion of a dicarboxylic acid unit having the hydrophilic group in all dicarboxylic acid units constituting the water-soluble polyester resin is preferably 48 mol% or less, more preferably 40 mol% or less, and still more preferably 32 mol% or less.
<14> The laminate according to any one of <5> to <13>, wherein a percentage of the amount of substance of the monomer unit B based on a total of the amount of substance of all monomer units in the temperature-responsive water-soluble resin is preferably 26 mol% or more, more preferably 28 mol% or more, and still more preferably 30 mol% or more.
<15> The laminate according to any one of <5> to <14>, wherein a percentage of the amount of substance of the monomer unit B based on a total of the amount of substance of all monomer units in the temperature-responsive water-soluble resin is preferably 42 mol% or less, more preferably 41 mol% or less, and still more preferably 40 mol% or less.
<16> A laminate comprising: a paper substrate layer; a temperature-responsive water-soluble resin layer; and a water-insoluble layer in this order,
   wherein the temperature-responsive water-soluble resin layer is poorly soluble in 25°C water but easily soluble in 70°C water,
   wherein the water-insoluble layer is a resin layer,
   wherein a resin constituting the resin layer is a polyolefin.
<17> A method for manufacturing the laminate according to any one of <1> to <16>, the method comprising:
   a step A of disposing a temperature-responsive water-soluble resin layer on a paper substrate layer; and
   a step B of forming, after the step A, a water-insoluble layer on a surface of the temperature-responsive water-soluble resin layer opposite from the paper substrate layer.
<18> A method for treating the laminate according to any one of <1> to <16>, the method comprising a step C of separating the paper substrate layer from the temperature-responsive water-soluble resin layer by treating the laminate with 50°C or higher neutral water.
<19> A method for recovering pulp, the method comprising a step D1 of recovering pulp derived from the paper substrate layer, after the step C of the method according to <18>.
<20> A method for manufacturing recycled paper, the method comprising the method according to <19>.
<21> A method for recovering a water-insoluble layer, the method comprising a step D2 of recovering a raw material of the water-insoluble layer after the step C of the method according to <20>.
<22> A method for recovering a temperature-responsive water-soluble resin, the method comprising a step D3 of recovering the temperature-responsive water-soluble resin after the step C of the method according to <21>.
<23> Packing stuff comprising the laminate according to any one of <1> to <16>.

### EXAMPLES

The pressure is expressed in an absolute pressure. "Normal pressure" refers to 101.3 kPa.

### <Synthesis of temperature-responsive water-soluble resin> [Temperature-responsive water-soluble resin 1]

Raw materials described in Table 1 were charged into a 2-L stainless-steel separable flask (equipped with a K-shaped tube, a stirrer, and a nitrogen-introducing tube), and heated by raising the surface temperature of a mantle heater from 160°C to 260°C, under stirring in a nitrogen atmosphere, and a transesterification reaction was performed at that temperature under stirring for 6.5 hours. Thereafter, a reaction was performed for 1.5 hours with the surface temperature of the mantle heater raised from 260°C to 290°C, and simultaneously the pressure decreased from normal pressure to 1.5 kPa. Thereafter, the pressure was decreased from 1.5 kPa to 1.0 kPa, and a reaction was performed for 6 hours. Finally, nitrogen was introduced into the stainless-steel separable flask, and the pressure was returned to normal pressure. A temperature-responsive water-soluble resin 1 described in Table 1 was thus obtained.

### [Temperature-responsive water-soluble resin 2]

Raw materials described in Table 1 were charged into a 2-L stainless-steel separable flask (equipped with a K-shaped tube, a stirrer, and a nitrogen-introducing tube), and heated by raising the surface temperature of a mantle heater from 160°C to 220°C, under stirring in a nitrogen atmosphere, and a transesterification reaction was performed at that temperature under stirring for 6.5 hours. Thereafter, a reaction was performed for 1.5 hours with the surface temperature of the mantle heater raised from 220°C to 240°C, and simultaneously the pressure decreased from normal pressure to 8.5 kPa. Thereafter, the pressure was decreased from 8.5 kPa to 1.3 kPa, and a reaction was performed for 3 hours. Finally, nitrogen was introduced into the stainless-steel separable flask, and the pressure was returned to normal pressure. A temperature-responsive water-soluble resin 2 described in Table 1 was thus obtained.

### [Temperature-responsive water-soluble resin 3]

Raw materials described in Table 1 were charged into a 2-L stainless-steel separable flask (equipped with a K-shaped tube, a stirrer, and a nitrogen-introducing tube), and heated by raising the surface temperature of a mantle heater from 160°C to 220°C, under stirring in a nitrogen atmosphere, and a transesterification reaction was performed at that temperature under stirring for 6.5 hours. Thereafter, a reaction was performed for 5 hours with the surface temperature of the mantle heater raised from 220°C to 250°C, and simultaneously the pressure decreased from normal pressure to 0.4 kPa. Finally, nitrogen was introduced into the stainless-steel separable flask, and the pressure was returned to normal pressure. A temperature-responsive water-soluble resin 3 described in Table 1 was thus obtained.

### [Temperature-responsive water-soluble resin 4]

Raw materials described in Table 1 were charged into a 2-L stainless-steel separable flask (equipped with a K-shaped tube, a stirrer, and a nitrogen-introducing tube), and heated by raising the surface temperature of a mantle heater from 160°C to 220°C, under stirring in a nitrogen atmosphere, and a transesterification reaction was performed at that temperature under stirring for 6.5 hours. Thereafter, a reaction was performed for 15 hours with the surface temperature of the mantle heater raised from 220°C to 240°C, and simultaneously the pressure decreased from normal pressure to 1.3 kPa. Finally, nitrogen was introduced into the stainless-steel separable flask, and the pressure was returned to normal pressure. A temperature-responsive water-soluble resin 4 described in Table 1 was thus obtained.

### [Temperature-responsive water-soluble resin 5]

Raw materials described in Table 1 were charged into a 2-L stainless-steel separable flask (equipped with a K-shaped tube, a stirrer, and a nitrogen-introducing tube), and heated by raising the surface temperature of a mantle heater from 160°C to 220°C, under stirring in a nitrogen atmosphere, and a transesterification reaction was performed at that temperature under stirring for 6 hours. Thereafter, a reaction was performed for 8 hours with the surface temperature of the mantle heater raised from 220°C to 260°C, and simultaneously the pressure decreased from normal pressure to 1.3 kPa. Finally, nitrogen was introduced into the stainless-steel separable flask, and the pressure was returned to normal pressure. A temperature-responsive water-soluble resin 5 described in Table 1 was thus obtained.

### <Synthesis of temperature-non-responsive water-soluble resin>

### [Temperature-non-responsive water-soluble resin 1]

Raw materials described in Table 1 were charged into a 2-L stainless-steel separable flask (equipped with a K-shaped tube, a stirrer, and a nitrogen-introducing tube), and heated by raising the surface temperature of a mantle heater from 160°C to 260°C, under stirring in a nitrogen atmosphere, and a transesterification reaction was performed at that temperature under stirring for 6 hours. Thereafter, the pressure was decreased from normal pressure to 4.7 kPa, and a reaction was performed for 1 hour. After the 1-hour reaction, the surface temperature of the mantle heater was raised from 260°C to 270°C, and a reaction was performed for 3.5 hours. Finally, nitrogen was introduced into the stainless-steel separable flask, and the pressure was returned to normal pressure. A temperature-non-responsive water-soluble resin 1 described in Table 1 was thus obtained.

### [Temperature-non-responsive water-soluble resin 2]

Raw materials described in Table 1 were charged into a 2-L stainless-steel separable flask (equipped with a K-shaped tube, a stirrer, and a nitrogen-introducing tube), and heated by raising the surface temperature of a mantle heater from 160°C to 260°C, under stirring in a nitrogen atmosphere, and a transesterification reaction was performed at that temperature under stirring for 6.5 hours. Thereafter, the pressure was decreased from normal pressure to 5.5 kPa, and a reaction was performed for 3 hours. After the 3-hours reaction, the surface temperature of the mantle heater was raised from 260°C to 290°C, and a reaction was performed for 5.5 hours. Finally, nitrogen was introduced into the stainless-steel separable flask, and the pressure was returned to normal pressure. A temperature-non-responsive water-soluble resin 2 described in Table 1 was thus obtained.

**[Table 1]**

| | | | Temperature-responsive water-soluble resin | | | | | Temperature-non-responsive water-soluble resin | |
|---|---|---|---|---|---|---|---|---|---|
| | | | 1 | 2 | 3 | 4 | 5 | 1 | 2 |
| | Dicarboxylic acid (g) | NDCM | 97.7 | 0 | 0 | 90.0 | 0.0 | 122 | 293 |
| | | DMT | 0 | 100 | 135 | 0 | 270 | 0 | 0 |
| | | DMI | 0 | 100 | 90 | 0 | 0 | 0 | 0 |
| | | DMA | 0 | 0 | 0 | 64.0 | 0 | 0 | 0 |
| Amount of raw material used | | SID | 40.6 | 91.5 | 92.7 | 65.5 | 113 | 148 | 48.3 |
| | Diol (g) | EG | 76.7 | 0 | 0 | 0 | 259 | 143 | 195 |
| | | 1,4-CHDM | 0 | 146 | 0 | 104 | 0 | 0 | 0 |
| | | 1,3-PD | 0 | 103 | 0 | 74.0 | 0 | 0 | 0 |
| | | 1,6-HD | 0 | 0 | 180 | 0 | 0 | 0 | 0 |
| | Reaction catalyst (mg) | Ti(OBu)₄ | 82.0 | 210 | 631 | 252 | 757 | 163 | 245 |
| | | AcONa | 506 | 563 | 0 | 676 | 0 | 405 | 608 |
| Content of sulfonate group (mmol/g) | | | 1.00 | 0.820 | 0.780 | 0.790 | 1.00 | 1.86 | 0.480 |
| Proportion of sulfonate group-containing monomer unit in all dicarboxylic acid monomer units (mol%) | | | 25.2 | 22.6 | 21.8 | 21.6 | 21.6 | 49.2 | 12.4 |
| Weight average molecular weight (Mw) | | | 13900 | 9500 | 19300 | 24260 | 13600 | 3900 | 12700 |
| Glass transition temperature *T*_{g}(°C) | | | 108 | 65 | 13 | 61 | 68 | 107 | 114 |
| Crystalline melting point *T*ₘ(°C) | | | - | - | 66 | - | 140 | - | - |
| Water dissolution rate (%) | | 25°C | 5.1 | 6.2 | 1.3 | 1.9 | 9.6 | 100 | 0.9 |
| | | 70°C | 100 | 99 | 99 | 98 | 99.3 | 99 | 8.4 |

Notations in Table 1 mean the following.
NDCM: Dimethyl naphthalenedicarboxylate (manufactured by Tokyo Chemical Industry Co., Ltd, first grade)
DMT: Dimethyl terephthalate (manufactured by Tokyo Chemical Industry Co., Ltd.)
DMI: Dimethyl isophthalate (manufactured by Tokyo Chemical Industry Co., Ltd.)
DMA: Dimethyl adipate (Tokyo Chemical Industry Co., Ltd.)
SID: Sodium dimethyl 5-isophthalate (manufactured by FUJIFILM Wako Pure Chemical Corporation, special grade)
EG: Ethylene glycol (manufactured by FUJIFILM Wako Pure Chemical Corporation)
1,4-CHDM: 1,4-cyclohexanedimethanol (manufactured by FUJIFILM Wako Pure Chemical Corporation, cis-trans mixture)
1,3-PD: 1,3-propanediol (manufactured by Tokyo Chemical Industry Co., Ltd.)
1,6-HD: 1,6-hexanediol (manufactured by Tokyo Chemical Industry Co., Ltd.)
Ti(OBu)₄: Titanium tetrabutoxide (manufactured by Tokyo Chemical Industry Co., Ltd, first grade)
AcONa: Sodium acetate (manufactured by FUJIFILM Wako Pure Chemical Corporation, special grade)

### <Evaluation method>

### [Proportion of amount of substance of monomer unit derived from dimethyl sodium 5-sulfoisophthalate (sulfonate group-containing monomer unit) to total amount of substance of all dicarboxylic acid monomer units constituting water-soluble resin]

Each of the water-soluble resins (10 mg) was dissolved in a mixed solvent of deuterochloroform and deuterotrifluoroacetic acid (mass ratio of 3 : 2), and proton NMR was measured by an NMR, i.e., MR400, manufactured by Agilent Technologies, Inc. As to a monomer unit derived from dimethyl sodium 5-sulfoisophthalate, an amount of substance L of a sulfonate group-containing monomer unit was calculated by dividing a peak integration value derived from an aromatic ring by the number of protons directly bonded to the aromatic ring. As to a dicarboxylic acid monomer unit derived from dimethyl naphthalenedicarboxylate, dimethyl terephthalate, or dimethyl isophthalate, a total amount of substance M of dicarboxylic acid monomer units containing no sulfonate group was calculated by dividing a peak integration value derived from an aromatic ring by the number of protons directly bonded to the aromatic ring, and adding the quotients together. A value obtained by the following formula (1), i.e., dividing the amount of substance L by the sum of the amount of substance L and the amount of substance M (total amount of substance of all the dicarboxylic acid monomer units), was defined as a proportion (mol%) of the amount of substance of the sulfonate group-containing monomer unit to the total amount of substance of all the dicarboxylic acid monomer units constituting the water-soluble resin. 100 × Amount of substance L/(Amount of substance L + Amount of substance M)

### [Weight average molecular weight (Mw)]

A calibration curve was prepared from standard polystyrene using a gel permeation chromatograph (GPC) method under the following conditions to determine the weight average molecular weight (Mw).
Apparatus: HLC-8320 GPC (Detector integrated type, manufactured by TOSOH CORPORATION)
Column: α-M × 2 columns (7.8 mmI.D. × 30 cm, manufactured by TOSOH CORPORATION)
Eluent: 60 mmol/L phosphoric acid + 50 mmol/L lithium brominate/dimethylformamide solution
Flow rate: 1.0 ml/min
Column temperature: 40°C
Detector: RI detector
Standard substance: polystyrene

### [Glass transition temperature (Tg)]

5 mg of each water-soluble resin were sealed in an aluminum pan, and using a DSC apparatus (DSC8500, Hitachi High-Tech Science Corporation), the temperature was increased from 30°C to 250°C, cooled to -20°C, and then increased again to 250°C. In this process, the temperature was increased and decreased at a rate of 10°C/min. The glass transition temperature Tg (°C) was determined from the baseline shift of the DSC curve obtained by raising the temperature again.

### [Crystalline melting point (Tm)]

A water dispersion of each of the temperature-responsive water-soluble resins 3 and 5 adjusted to a solid-content concentration of 10 mass% was poured onto a Teflon (registered trade name) petri dish, and heated and dried at 50°C on a hot plate for 8 hours. The obtained dried film (5 mg) was sealed in an aluminum pan and heated using a DSC apparatus (manufactured by Hitachi High-Tech Science Corporation, DSC8500) at 10°C/min from 30°C to 250°C. A crystalline melting point Tm (°C) was obtained from an endothermic peak top in a DSC curve obtained.

### [Water-solubility test]

Each of the water-soluble resins (1.0 g), in a powdery state, described in Table 2 was added into 20-mL screw bottles containing 10 g of deionized water at 25°C and 70°C, and stirred at 300 rpm. After the lapse of 10 minutes, the test liquid was subjected to suction filtration using dried filter paper (manufactured by ADVANTEC CO., LTD., No. 5C), and the water dissolution rate (%) was calculated by the following formula (2), using the difference in weight including the filter paper. The drying was performed under reduced pressure at 60°C for 2 hours. 100 × (Weight of resin - (Weight of dried filter paper after test - Weight of dried filter paper before test))/(Weight of resin)

As a water-soluble resin of Comparative Example 3, polyvinyl pyrrolidone K30 (manufactured by FUJIFILM Wako Pure Chemical Corporation) was used.

### [Evaluation of laminate]

### [Examples 1 to 6 and Comparative Examples 1 to 3]

### (Production of water-soluble resin-coated paper)

The water-soluble resin of each of the examples and the like was stirred in 80°C water for 1 hour so as to give a solid content of 10 mass% or 20 mass%, and a water dispersion of the water-soluble resin of each of the examples and the like was obtained. The water dispersion (1.0 mL) was applied to high-quality paper (basis weight: 64 g/m²) dried for 1 minute on a hot plate, which had been kept at 90°C in advance, using a bar coater (manufactured by Matsuo Sangyo Co., Ltd., #6, #8, #18) so that the coating area was 100 mm × 150 mm. An excess of the water dispersion was wiped off, and drying was performed for 1 minute on the hot plate kept at 90°C. Water-soluble resin-coated paper including a water-soluble resin layer, which contains the water-soluble resin corresponding to the example or the like thereof, and a paper substrate layer formed of the high-quality paper was thus obtained. The resin coating amount (g/m²) was defined as a value obtained by dividing the weight (g) of applied resin, which was calculated from the difference in weight of the dried paper between before and after the application, by the coating area.

### (Production of laminate by dry lamination)

An adhesive composition was obtained by using polyester polyurethane polyol (manufactured by DIC Corporation, LX-500) as a main agent, and aromatic polyisocyanate (manufactured by DIC Corporation, KW-75) as a curing agent, and mixing the main agent, the curing agent, and ethyl acetate as a diluent at a weight ratio of 10 : 1 : 16. The adhesive composition (1.0 mL) was, using a bar coater (manufactured by Matsuo Sangyo Co., Ltd., #8), applied to a film (thickness: 50 µm), having a surface thereof corona-treated, of linear low-density polyethylene (LLDPE) (manufactured by WAKO Co., Ltd., WZ-1N) at the corona-treated surface so that the coating area was 100 mm × 150 mm. An excess of the adhesive was wiped off, and drying was performed at room temperature for 1 minute to evaporate the solvent. Subsequently, the adhesive-coated surface of the film and the water-soluble resin layer of the water-soluble resin-coated paper, which were bonded to each other, were subjected to a curing reaction at 40°C for 2 days under a load of 10 kg. A laminate according to each of Examples 1 to 6 and Comparative Examples 1 to 4 was thus obtained.

### [Example 7]

A laminate according to Example 7 was obtained in the same manner as in Example 2 except for replacing the film (thickness: 50 µm), having a surface thereof corona-treated, of linear low-density polyethylene (LLDPE) (manufactured by WAKO Co., Ltd., WZ-1N) with a film (thickness: 30 µm), having a surface thereof corona-treated, of biaxially stretched polypropylene (OPP) (manufactured by Futamura Chemical Co., Ltd., FOR-AQ).

### [Example 8]

A laminate according to Example 8 was obtained in the same manner as in Example 1 except for replacing the high-quality paper with kraft paper (basis weight: 70 g/m²), and changing the resin coating amount to 4.7 g/m².

### [Example 9]

### (Formation of laminate by melt lamination)

A laminate according to Example 9 was obtained in the same manner as in Example 8 except for changing the resin coating amount to 6.2 g/m² and the lamination method from the dry lamination to the following melt lamination.

A film (thickness: 50 µm) of linear low-density polyethylene (LLDPE) (manufactured by WAKO Co., Ltd., WZ-N) placed on a SUS plate having undergone a peeling process was put on a hydraulic forming machine (manufactured by Toho machinery kabusiki kaisha, TM-26) heated at 280°C, and the film was melted. On the molten film, the water-soluble resin-coated paper obtained by using the temperature-responsive water-soluble resin 1 as a water-soluble resin was stacked and, using a press forming machine (manufactured by Toyo Seiki Seisaku-sho, Ltd., Labo Press P2-30T), cold-pressed at 15°C and 20 MPa for 60 seconds. A laminate according to Example 9 was thus obtained.

### [Example 10]

### (Production of peeling-paper laminate)

A peeling agent composition was obtained by using a solvent-type silicone peeling agent (manufactured by Shin-Etsu Chemical Co., Ltd., KS-847), a catalyst (manufactured by Shin-Etsu Chemical Co., Ltd., CAT-PL-10T), and toluene (manufactured by FUJIFILM Wako Pure Chemical Corporation) as a solvent, and mixing the materials at a mass ratio of 100 : 1 : 899. The peeling agent composition (1.0 mL) was, using a bar coater (manufactured by Matsuo Sangyo Co., Ltd., #8), applied to the surface of a water-soluble resin layer of water-soluble resin-coated paper obtained by the same method as the method for producing the water-soluble resin-coated paper of Example 1, so that the coating area was 100 mm × 150 mm. An excess of the peeling agent composition was wiped off, and a curing treatment was performed for 1 minute on a hot plate kept at 120°C. A laminate according to Example 10 was thus obtained.

### [Comparative Example 4]

A laminate according to Comparative Example 4 was obtained in the same manner as in Example 1 except for bonding the high-quality paper to the film without application of a water-soluble resin.

### [Comparative Example 5]

A laminate according to Comparative Example 5 was obtained in the same manner as in Comparative Example 1 except for replacing the paper with kraft paper (basis weight: 70 g/m²), and changing the resin coating amount to 5.5 g/m².

### [Comparative Example 6]

A laminate according to Comparative Example 6 was obtained in the same manner as in Comparative Example 5 except for changing the resin coating amount to 6.3 g/m², and the lamination method to the melt lamination.

### [Comparative Example 7]

A laminate according to Comparative Example 7 was obtained in the same manner as in Comparative Example 6 except for replacing the water-soluble resin with the temperature-non-responsive water-soluble resin 2, and changing the resin coating amount to 7.1 g/m².

### [Laminate detachment test]

A test piece was obtained by cutting out a 20-mm square piece from the laminate, and temporarily bonding the square piece onto 30 mm × 100 mm slide glass, with the paper side directed outside, using double-sided tape (manufactured by NICHIBAN CO., LTD., NICETACK Ultra Strong Adhesion, width: 15 mm). The produced test piece was added into each of 300-mL beakers containing 300 g of tap water at 25°C and 70°C, fixed to the beaker so that the test piece did not contact with a stirrer, and subjected to stirring at 400 rpm. The time in which the paper was completely peeled from the test piece was defined as a detachment time (s), and those that did not allow peeling after the lapse of 60 minutes were evaluated as undetachable. The test piece having the paper completely peeled therefrom was taken out from the beaker, and the LLDPE film (water-insoluble layer) was recovered.

### [Paper recovery rate]

A test piece was produced in the same manner as in the laminate detachment test, the test piece was added into a 300-mL beaker containing 300 g of 70°C tap water, fixed to the beaker so that the test piece did not contact with a stirrer, and subjected to stirring at 400 rpm. As to those that allowed peeling within 60 minutes, the paper was recovered and then washed with tap water, and dried under reduced pressure at 60°C for 2 hours. Those that did not allow peeling after the lapse of 60 minutes were evaluated as unrecoverable. The paper recovery rate (%) was calculated by the following formula (3), using the difference in weight of the paper between before and after the test. 100 × mass of paper after test/mass of paper before test

Table 2 shows the evaluation results.

**[Table 2]**

| | Laminate | | | | | | | Evaluation result | | |
|---|---|---|---|---|---|---|---|---|---|---|
| | Paper substrate layer | Water-soluble resin layer | | | | Water-insoluble layer | Lamination method | Detachment time in water (s) | | Paper recovery rate (%) |
| | | Type | Water dissolution rate (%) | | Resin coating amount (g/m²) | | | | | |
| | | | 25°C | 70°C | | | | 25°C | 70°C | 70°C |
| Example 1 | High-quality paper | Temperature-responsive water-soluble resin 1 | 5.1 | 100 | 1.5 | LLDPE | Dry lamination | Undetachable | 90 | 97 |
| Example 2 | High-quality paper | Temperature-responsive water-soluble resin 1 | 5.1 | 100 | 3.3 | LLDPE | Dry lamination | Undetachable | 10 | 100 |
| Example 3 | High-quality paper | Temperature-responsive water-soluble resin 1 | 5.1 | 100 | 6.1 | LLDPE | Dry lamination | 1720 | 10 | 100 |
| Example 4 | High-quality paper | Temperature-responsive water-soluble resin 2 | 6.2 | 99 | 5.1 | LLDPE | Dry lamination | Undetachable | 10 | 100 |
| Example 5 | High-quality paper | Temperature-responsive water-soluble resin 3 | 1.3 | 99 | 4.9 | LLDPE | Dry lamination | Undetachable | 30 | 100 |
| Example 6 | High-quality paper | Temperature-responsive water-soluble resin 4 | 1.9 | 98 | 3.5 | LLDPE | Dry lamination | Undetachable | 45 | 99 |
| Example 7 | High-quality paper | Temperature-responsive water-soluble resin 1 | 5.1 | 100 | 3.3 | OPP | Dry lamination | Undetachable | 40 | 97 |
| Example 8 | Kraft paper | Temperature-responsive water-soluble resin 1 | 5.1 | 100 | 4.7 | LLDPE | Dry lamination | Undetachable | 130 | 100 |
| Example 9 | Kraft paper | Temperature-responsive water-soluble resin 1 | 5.1 | 100 | 6.2 | LLDPE | Melt lamination | Undetachable | 260 | 99 |
| Example 10 | High-quality paper | Temperature-responsive water-soluble resin 5 | 5.1 | 100 | 3.8 | Peeling agent | - | Undetachable | 130 | 100 |
| Comparative Example 1 | High-quality paper | Temperature-non-responsive water-soluble resin 1 | 100 | 99 | 5.1 | LLDPE | Dry lamination | 330 | 60 | - |
| Comparative Example 2 | High-quality paper | Temperature-non-responsive water-soluble resin 2 | 0.9 | 8.4 | 6 | LLDPE | Dry lamination | Undetachable | Undetachable | Unrecoverable |
| Comparative Example 3 | High-quality paper | Polyvinyl pyrrolidone | 100 | 98 | 6.1 | LLDPE | Dry lamination | 180 | 130 | - |
| Comparative Example 4 | High-quality paper | Uncoated | - | - | - | LLDPE | Dry lamination | Undetachable | Undetachable | Unrecoverable |
| Comparative Example 5 | Kraft paper | Temperature-non-responsive water-soluble resin 1 | 100 | 99 | 5.5 | LLDPE | Dry lamination | 150 | 50 | - |
| Comparative Example 6 | Kraft paper | Temperature-non-responsive water-soluble resin 1 | 100 | 99 | 6.3 | LLDPE | Melt lamination | 420 | 380 | - |
| Comparative Example 7 | Kraft paper | Temperature-non-responsive water-soluble resin 2 | 0.9 | 8.4 | 7.1 | LLDPE | Melt lamination | Undetachable | Undetachable | Unrecoverable |

## Claims

1. A laminate comprising: a paper substrate layer; a temperature-responsive water-soluble resin layer; and a water-insoluble layer in this order.

2. The laminate according to claim 1, wherein the temperature-responsive water-soluble resin layer is poorly soluble in 25°C water but easily soluble in 70°C water.

3. The laminate according to claim 1 or 2, wherein the water-insoluble layer is a resin layer.

4. The laminate according to claim 3, wherein a resin constituting the resin layer is a polyolefin.

5. The laminate according to any one of claims 1 to 4, wherein the temperature-responsive water-soluble resin layer contains a temperature-responsive water-soluble resin.

6. The laminate according to claim 5, wherein the temperature-responsive water-soluble resin has a hydrophilic group.

7. The laminate according to claim 5 or 6, wherein the temperature-responsive water-soluble resin contains a monomer unit A having a hydrophilic group, and a monomer unit B not having the hydrophilic group.

8. The laminate according to claim 6 or 7, wherein a content of the hydrophilic group in the temperature-responsive water-soluble resin is 0.5 mmol/g or more and 1.8 mmol/g or less.

9. The laminate according to any one of claims 6 to 8, wherein the hydrophilic group is a sulfonate group.

10. The laminate according to any one of claims 6 to 9, wherein the temperature-responsive water-soluble resin is a water-soluble polyester resin having the hydrophilic group.

11. The laminate according to claim 10, wherein a proportion of a dicarboxylic acid unit having the hydrophilic group in all dicarboxylic acid units constituting the water-soluble polyester resin is 16 mol% or more and 48 mol% or less.

12. A method for manufacturing the laminate according to any one of claims 1 to 11, the method comprising:
a step A of disposing a temperature-responsive water-soluble resin layer on a paper substrate layer; and
a step B of forming, after the step A, a water-insoluble layer on a surface of the temperature-responsive water-soluble resin layer opposite from the paper substrate layer.

13. A method for treating the laminate according to any one of claims 1 to 11, the method comprising a step C of separating the paper substrate layer from the temperature-responsive water-soluble resin layer by treating the laminate with 50°C or higher neutral water.

14. A method for recovering pulp, the method comprising a step D1 of recovering pulp derived from the paper substrate layer, after the step C of the method according to claim 13.

15. A method for manufacturing recycled paper, the method comprising the method according to claim 14.

16. A method for recovering a water-insoluble layer, the method comprising a step D2 of recovering a raw material of the water-insoluble layer after the step C of the method according to claim 13.

17. A method for recovering a temperature-responsive water-soluble resin, the method comprising a step D3 of recovering the temperature-responsive water-soluble resin after the step C of the method according to claim 13.

18. Packing stuff comprising the laminate according to any one of claims 1 to 11.
